**Europäisches Patentamt**

**European Patent Office**

**Office européen des brevets**

(19)

(11) Publication number : **0 510 986 A2**

# (12) EUROPEAN PATENT APPLICATION

(21) Application number : **92303680.0**

(22) Date of filing : **23.04.92**

(51) Int. Cl.⁵ : **C08B 37/00, C08B 37/14**

(30) Priority : **26.04.91 US 691848**

(43) Date of publication of application :
**28.10.92 Bulletin 92/44**

(84) Designated Contracting States :
**AT BE CH DE DK ES FR GB GR IT LI LU NL SE**

(71) Applicant : **RHONE-POULENC INC.**
**125 Black Horse Lane**
**Monmouth Junction, New Jersey 08852 (US)**

(72) Inventor : **Yeh, Michael H.**
**3608 Fallen Timber Drive**
**Louisville, Kentucky 40222 (US)**

(74) Representative : **De Minvielle-Devaux, Ian**
**Benedict Peter et al**
**CARPMAELS & RANSFORD 43, Bloomsbury**
**Square**
**London WC1A 2RA (GB)**

(54) **Process for the production of phosphated guar.**

(57)   Water-soluble phosphate esters of guar gum are prepared by mixing the guar with an aqueous solution of a sodium salt of phosphoric acid having a pH of about 5 to about 7, drying the mixture to a moisture content of about 5 to about 12 percent, and heating the mixture in a closed chamber at a temperature of about 150°C to about 180°C for about 1 to 5 hours.

EP 0 510 986 A2

## Background of the Invention

The field of art to which this invention pertains is derivatives of carbohydrate gums.

Polysaccharides, such as starch, cellulose products, and polygalactomannans, have found extensive use in industry, particularly as water-soluble thickening agents. Derivatives of the polysaccharides have also been widely used. Examples of such derivatives are carboxymethyl ethers, alkyl ethers, hydroxyalkyl ethers, tertiary amine ethers and quaternary ammonium ethers. Oxidatively or hydrolytically depolymerized polysaccharides have also been utilized industrially.

Phosphate esters of polysaccharides are also useful industrial products. Phosphated starch was prepared as early as 1919 by Kerb who reacted oxyphosphate and starch. The preparation of phosphated starch has been described in a number of patents, such as U.S. Patent Nos. 2,824,870, 2,884,412, 2,961,440 and 3,555,009. The general reaction for preparing the water-soluble and swellable starch derivatives is to soak the starch in an aqueous solution of alkaline phosphate salts followed by heating at 120-170°C.

Polysaccharides containing both anionic and cationic substitutents are described in U.S. Patent No. 3,467,647. In Example 9 of the patent, a process for preparing the trimethylammoniumhydroxypropyl ether, phosphate ester of guar gum is described.

Locust bean gum, a polygalactomannan, has limited solubility in cold water, i.e., water at 25°C or below. A temperature of about 86°C is needed to obtain maximum solubility and viscosity in water. U.S. Patent No. 4,162,925 describes a process for making locust bean gum soluble in cold water which involves forming esters of the polygalactomannan with phosphoric acid.

Guar gum, a polygalactomannan similar in structure to locust bean gum, is soluble in cold water. However, phosphate esters of guar gum, when prepared using the procedure for making phosphate esters of starch or locust bean gum, are water insoluble and do not swell even in hot water.

U.S. Patent No. 4,320,226 describes a process for preparing water-soluble phosphate esters of guar gum. The process is a two step process which involves reacting the guar gum with an alkali metal phosphate in water at a pH of about 4.5 to about 8 and at a temperature of about 130°C to form a water insoluble phosphate ester of guar gum followed by depolymerizing the guar under oxidizing conditions at a temperature of about 70°C to about 90°C. The process as described in the patent can be modified by conducting the phosphatizing reaction on pre-depolymerized guar or by conducting the phosphatizing and depolymerizing reactions simultaneously.

As stated hereinabove, the guar derivative obtained by the process described in U.S. Patent No. 4,320,226 is soluble in water. However, due to the depolymerization reaction, the aqueous solutions have viscosities which are lower than desirable for many applications. Also the process requires an additional step which adds to production costs.

## Summary of Invention

This invention pertains to a process for the production of phosphate esters of guar. In particular, this invention relates to a process for producing water-soluble phosphate esters of guar which form high viscosity solutions in water at low concentrations.

According to this invention, guar gum is reacted with an aqueous solution of an alkali metal phosphate salt having a pH of about 5 to about 7 by thoroughly mixing the components and drying them to a moisture content of about 5 to about 12 weight percent, followed by heating in a closed container at a temperature of about 150°C to about 180°C for about 1 to about 5 hours.

## Description of Preferred Embodiments

Guar gum used in this invention is a polygalactomannan obtained from the endosperm of the seed of the guar plant which is native to India and Pakistan. The basic unit of the galactomannan polymer in guar gum contains two mannose units with a glycosidic linkage and a galactose unit attached to one of the hydroxyls of the mannose unit. On the average, each of the sugar units has three available hydroxyl sites, all of which can react. The extent of reaction or derivatization of the hydroxyl groups is referred to either as molar substitution (M.S.) or degree of substitution (D.S.). Molar substitution is the number of units (moles of derivatizing agent) which react per sugar unit of the polygalactomannan. Degree of substitution is the average number of hydroxyl groups of the sugar units that react with the derivatizing agent.

The guar gum endosperm is obtained as "purified splits" or "double purified splits", depending upon the degree of purification, by mechanical separation of the endosperm from the hull and germ of the guar seed. The splits themselves can be derivatized or they can be ground to a fine powder and derivatized in powder form.

In addition to underivatized guar gum, hydroxyalkyl ethers of guar gum, wherein the alkyl group contains 2 to 4 carbon atoms, can be used in the process of this invention. Such hydroxyalkyl derivatives have a D.S. of about 0.1 to about 2. Hydroxyalkyl ethers of guar gum are described in detail in U.S. Patent No. 3,483,121.

Orthophosphoric acid, $H_3PO_4$, is terbasic, the ionization constants being $K_1 = 7.5 \times 10^{-3}$, $K_2 = 6.2 \times 10^{-8}$ and $K_3 = 1 \times 10^{-13}$. Due to the big difference in

the $K_1$ and $K_2$ inonization constants, phosphoric acid can be titrated as a mono or as a dibasic acid. When an aqueous solution of the acid is titrated with sodium hydroxide, the pH changes suddenly to pH 4-5 on completion of the formation of sodium dihydrogen phosphate using methyl orange or methyl red indicators, and to pH 9 on the completion of the formation of disodium hydrogen phosphate using thymol blue, cresolphthalein or phenolphthalein indicators. The third hydrogen atom is so feebly acidic that no indicator is satisfactory to measure its neutralization.

The sodium phosphate salt used in this invention is a mixture of sodium dihydrogen phosphate and disodium hydrogen phosphate having a pH in aqueous solution of about 5 to about 7, preferably about 5.5 to about 6.5.

In carrying out the process of this invention, the guar gum, either in splits or powder form, or the hydroxyalkyl guar gum is blended with an aqueous solution of the sodium phosphoric salt having the desired pH value. Preferably, the pH of a solution of monosodium dihydrogen phosphate is adjusted to a pH of about 5 to about 7 with sodium hydroxide. Of course, the phosphate acid salt solution can be made with phosphoric acid and sodium hydroxide or with disodium hydrogen phosphate and phosphoric acid as long as the pH is within the desired range.

Preferably, the phosphate derivatizing agent is reacted with the guar as the solution described hereinbefore having the desired pH. Alternatively, the phosphoric acid and the sodium hydroxide can be added separately to the guar as long as the proportions are such that when combined, the pH is about 5 to about 7.

The amount of derivatizing agent to guar used in this invention is about 7 to about 50 parts by weight, calculated as monosodium dihydrogen phosphate, per 100 parts by weight of guar, and preferably, about 30 to about 40 parts per 100 parts.

In conducting the phosphatizing reaction, water must be present. The amount of water will vary from about 20 parts to about 120 parts by weight per 100 parts by weight of guar. This amount of water is the total amount of water mixed with the guar gum which includes the water in the phosphatizing reaction. The amount of water should be enough to homogeneously mix well with the gum and to swell it but should not be used in such amounts that excessive hydration and solubilization of the gum occurs.

A low boiling, water miscible, organic liquid, e.g., methanol, can also be used in the process of this invention. The use of such liquid is particularly favored when powdered guar is used. Up to about 40 parts by weight of methanol, preferably about 10 to about 20 parts, to 100 parts of guar are added to the guar powder prior to the addition of water to prevent clumping.

In carrying out the process of this invention, the guar gum, the derivatizing agent, and water are mixed together for a time sufficient for the water and derivatizing agent to be absorbed by the guar and for the mixture to be uniformly blended. Generally, such times will vary from about 30 minutes to about 4 hours, e.g. to about 2 hours depending on the batch size, the type reactors and whether or not the guar gum is reacted in the form of splits or powder. Mixing can be done at room temperature, i.e., 20°C, up about 80°C. When mixing is completed, the blend is dried to a moisture content of about 12 weight percent or below, i.e., about 5 to about 12 weight percent. Drying can be conducted at room temperature or by heating using techniques well known in the art. Temperatures up to about 200°C can be used as long as the water content is not lowered below about 5 weight percent. A preferred drying temperature range is about 70°C to about 90°C. The dried product is then heated in a closed container at about 150°C to about 180°C, preferably about 160°C to about 170°C, for about 1 to about 5 hours, preferably about 1 to about 2 hours.

The resulting product is soluble in cold water, forming colloidal solutions of high viscosity. The product is also crosslinkable with aluminum ions.

The following examples illustrate the invention in greater detail. Parts and percentages, unless otherwise designated are parts and percentages by weight.

Example 1

In a suitable container 682 parts of monosodium dihydrogen phosphate containing 1 molecule of water of crystallization (MSP) were dissolved in 2000 parts of deionized water and the pH was adjusted to 6.0 with aqueous sodium hydroxide. The MSP solution was added to a suitable reactor and was heated to 77°C. Double purified guar splits, 2000 parts, were added and the reactor contents were mixed at 60°C-66°C for 30 minutes. The reactor contents were cooled to room temperature and were ground to a powder.

The powder when dissolved in water formed solutions having viscosities of 2000 cps and 12,000 cps at 1 percent and 2 percent solutions respectively. When aluminum ions were added to the solutions, crosslinking did not occur, indicating that the guar material was a blend of guar and MSP, not a phosphated guar.

A portion of the powder, 834 parts, was heated at 150°C - 160°C for two hours in a closed container. The yield was 722 parts. The product formed solutions in water having viscosities of 400-500 cps at 2 percent solids. Crosslinking occurred with aluminum ions, indicating that a phosphate guar had been obtained.

Example 2

To a suitable reactor were added 200 parts of guar gum. powder having a moisture content of 8.3 percent. The powder was mixed at room temperature with a solution containing 68 parts of MSP, 110 parts of deionized water and 20 parts of methanol. The pH of the solution had been adjusted to 6.0 with aqueous sodium hydroxide prior to mixing. The wet powder was dried at 70°C to a moisture content of 5-10 percent and was then placed in a closed heat chamber where it was heated at 150-160°C for 2 hours. The yield was 246.5 parts. The product when dissolved in water at 2 percent solids had a viscosity of 11,600 cps ant formed a rigid gel with aluminum ions.

## Example 3

Example 2 was repeated using the same components and procedure except after drying, the mixture was heated at 150°-160°C for two hours in an open heat chamber with forced air flow. The yield was 242.6 parts. The product was insoluble in water.

## Example 4

Using the procedure described in Example 3, 200 parts of guar powder (moisture content - 8.3 percent) was mixed with a solution of 68 parts MSP, 110 parts deionized water and 25 parts methanol, the pH of which had been adjusted to 4.7. After drying at 70°C and heating at 150-160°C for 2 hours in an open chamber the dry mixture (238 parts yield) was brown in color and was water insolible.

## Example 5

A portion of the insoluble product of Example 3, 160 parts, was mixed with a solution of 44 parts of 50 percent aqueous sodium hydroxide, 0.8 part of 30 percent aqueous hydrogen peroxide and 110 parts of deionized water. The mixture was heated at 70°C for 20 minutes, was cooled to room temperature, neutralized with a dilute solution of acetic acid in methanol, and was dried to a moisture content below 10 percent. The product, 186 parts yield, had a viscosity of 400-500 cps at 2 percent in water.

## Example 6

Using the same procedure described in Example 2, 200 parts of guar powder (8.3 percent moisture content) was mixed with a solution of 54 parts of MSP, 100 parts of deionized water and 50 parts of methanol adjusted to a pH of 6.0 with 8 parts of a 50 percent aqueous sodium hydroxide solution. The resulting product, in 226 parts yield, was soluble in water forming a solution at 2 percent solids having a viscosity of 4000 cps.

## Example 7

Example 6 was repeated except the methanol was replaced with isopropanol. The product, in 226 parts yield, was soluble in water forming a solution at 2 percent solids having a viscosity of 2500 cps.

## Example 8

Example 6 was repeated except no alcohol was used. The product, 271.5 parts yield, formed a solution in water at 2 percent solids having a viscosity of 300 cps.

## Example 9

To a suitable reactor were added 200 parts of hydroxypropyl guar which was mixed with a solution of 68 parts of MSP, 110 parts of deionized water and 20 parts methanol, the pH of the solution having been adjusted to 6.0 with aqueous sodium hydroxide. When thoroughly mixed, the blend was dried at 70°C to a moisture content of 5-10 percent and was then heated in a closed container at 150-160°C for 2 hours. An aqueous solution of the product (243.6 parts yield) at 2 percent solids had a viscosity of 16,000 cps.

## Example 10

Example 9 was repeated except the MSP solution had a pH of 5.0. The product yield was 243.1 parts and the viscosity of a 2 percent aqueous solution was 2300 cps.

## Example 11

Example 9 was repeated except that the pH of the MSP solution was 4.3. The product in 240 parts yield was light brown in color. The viscosity of a 2 percent solution in water was 6300 cps.

It will of course be understood that the present invention has been described above purely by way of example and that modifications of detail can be made within the scope of the invention.

## Claims

1. A process for preparing water-soluble phosphated guar which comprises:

   (a) mixing guar with an aqueous solution of a sodium salt of phosphoric acid having a pH of from about 5 to about 7:

   (b) drying the mixture to a moisture content of from about 5 to about 12 percent by weight: and

   (c) heating the mixture in a closed container at a temperature of from about 150°C to about 180°C for from about 1 to about 5 hours.

2.  The process of claim 1 wherein the guar is hydroxyalkyl guar wherein the alkyl group contains 2 to 4 carbon atoms, e.g. hydroxypropyl guar.

3.  The process of claim 1 wherein the guar is underivatized guar gum in splits or powdered form.

4.  The process of claim 1, 2 or 3, wherein the pH of the aqueous solution of the sodium salt of phosphoric acid is from about 5.5 to about 6.5.

5.  The process of any of claims 1 to 4, wherein the heating in the closed container is conducted for from 1 to about 2 hours.

6.  The process of any of claims 1 to 5 wherein the mixing in step (a) is conducted at a temperature of about 20°C to about 80°C.

7.  The process of any of claims 1 to 6 wherein the mixing in step (a) is conducted for from about 30 minutes to about 2 hours.

8.  The process of any of claims 1 to 7, wherein the drying in step (b) is conducted at room temperature.

9.  The process of any of claims 1 to 7, wherein the drying in step (b) is conducted at about 70° to about 90°C.

10. The process of any of claims 1 to 9, wherein the mixture formed in step (a) contains from about 7 to about 50 parts by weight of the sodium salt of phosphoric acid (calculated as monosodium dihydrogen phosphate) and from about 20 parts to about 120 parts by weight of water, per 100 parts by weight of guar.